Europäisches Patentamt

European Patent Office

Office européen des brevets

(19)

(11) Veröffentlichungsnummer: **0 020 843**
**A1**

(12) # EUROPÄISCHE PATENTANMELDUNG

(21) Anmeldenummer: 79810055.8

(22) Anmeldetag: 22.06.79

(51) Int. Cl.³: **G 11 B 3/44**

---

(43) Veröffentlichungstag der Anmeldung: 07.01.81
Patentblatt 81/1

(71) Anmelder: **DIAMOND S.A., Via dei Patrizi,
CH-6616 Losone-Locarno (CH)**

(72) Erfinder: **Marazzi, Silvio, CH-6654 Cavigliano (CH)**

(74) Vertreter: **STEINER, Martin, c/o AMMANN
PATENTANWAELTE AG BERN Schwarztorstrasse 31,
CH-3001 Bern (CH)**

(84) Benannte Vertragsstaaten: **AT BE CH DE FR GB IT LU
NL SE**

---

(54) **Abtastnadel für Schallplatten.**

(57) Die Abtastnadel weist eine Abtastspitze aus Diamant, Saphir oder dergleichen auf, die in der Art einer Pyramide mit rhombischer Grundfläche (4') geschliffen ist. Die Spitze weist vier zentralsymmetrisch liegende Rotationsoberflächen (5') auf. Die Kanten (6, 7) zwischen diesen Flächen sind leicht gerundet und das freie Ende der Spitze ist ebenfalls gerundet. Die Form der Spitze ist der Form des üblichen Schneidestichels nachgebildet, was ihr nicht nur hervorragende Abtastqualitäten verleiht, sondern eine einfache präzise Herstellung, unabhängig von Anisotropien des Materials, erlaubt.

- 1 -

## Abtastnadel für Schallplatten

Die vorliegende Erfindung betrifft eine Abtastnadel für Schallplatten, deren Spitze länglich-ovalen Querschnitt mit gerundeten Abtastkanten in den grösseren Querschnittsachsen aufweist. Eine derartige Abtastnadel ist beispielsweise aus der Schweizerpatentschrift 516 205 bekannt. Die Querschnittsform ist hierbei etwa elliptisch. Es erweist sich als schwierig, solche Abtastnadeln aus Diamant herzustellen. Es fällt nämlich schwer, die relativ komplizierte elliptische Form bei jedem Schliff genau zu reproduzieren. Es muss ausserdem verhältnismässig viel Material abgetragen werden, um zu der vorgesehenen elliptischen Form zu gelangen, was einen hohen Aufwand an Zeit und Material bedingt. Beim Abarbeiten erheblicher Materialvolumen ergeben sich ausserdem Schwierigkeiten infolge der Anisotropie des Materials. Schliesslich ist mit den bekannten Abtastnadeln keine ideale Abtastung der vom Stichel geschnittenen Tonspuren möglich, weil die Form der Abtastnadel zu sehr von der Form des Schneidstichels abweicht.

Die Erfindung beruht nun auf der Erkenntnis, dass durch eine weitgehende Annäherung der Form der Abtastnadel an die Form üblicher Schneidstichel all die obenerwähnten Nachteile behoben werden können. Die erfindungsgemässe Abtastnadel ist dadurch gekennzeichnet, dass die Spitze vier zentralsymmetrisch liegende Rotationsoberflächen aufweist, deren Achsen von der grösseren Querschnittsachse weiter entfernt sind als von der kleineren Querschnittsachse. Es ergibt sich damit eine Form der Spitze, ähnlich einer Pyramide mit rhombischer Grundfläche. Diese Form ist weitgehend der Form des Schneidstichels angepasst, womit der geometrische Fehler zwischen der relativen Lage Schneidstichel-Rille und Abtastnadel-Rille kompensiert werden kann. Das bei der Herstellung dieser pyramidenartigen Spitze abzutragende Materialvolumen ist verhältnismässig sehr gering, was zu einer einfachen, genauen Bearbeitung führt, ohne dass sich dabei Schwierigkeiten infolge der Anisotropie des Materials ergeben. Nicht nur die Kanten, sondern auch das freie Ende der Spitze müssen natürlich leicht gerundet sein, um einerseits einen angemessenen Auflagedruck und damit eine angemessene Abnützung an den Tonspuren zu erreichen und anderseits ein Anliegen der Spitze am Rillengrund der Schallplatten zu vermeiden.

Die Erfindung wird nun anhand der Zeichnung näher erläutert.

Figur 1 zeigt die Form des Schneidstichels,

Figur 2 zeigt eine theoretisch denkbare aus der Form des Schneidstichels resultierende Form einer Abtastspitze,

Figur 3 zeigt die praktisch realisierte Form der Abtastspitze,

Figur 4 veranschaulicht den Herstellungsvorgang für die Abtastspitze,

Figur 5 zeigt eine Seitenansicht der Abtastspitze,

Figur 6 zeigt eine Stirnansicht der Abtastspitze, und

Figur 7 zeigt eine Draufsicht auf die Abtastspitze.

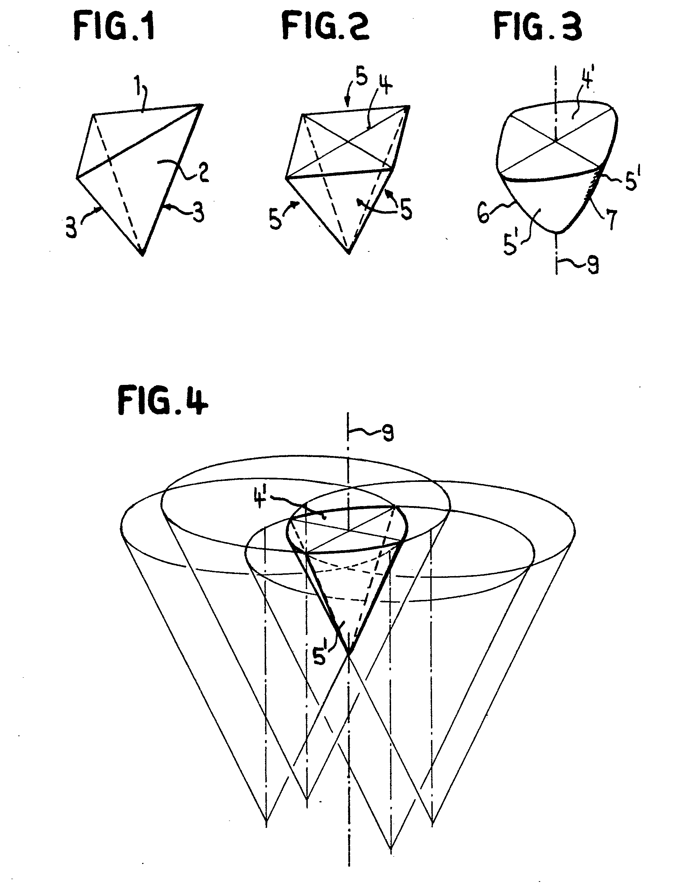

Wie bereits erwähnt, beruht die Konzeption der Spitze der erfindungsgemässen Abtastnadel darauf, die geometrische Form der Spitze soweit als möglich der Form des Schneidstichels anzunähern. Der in Figur 1 dargestellte Schneidstichel ist als Pyramide mit dreieckiger Grundfläche 1 und Seitenflächen 2 ausgebildet, wobei die die vordere sichtbare Seitenfläche begrenzenden Kanten 3 die eigentlichen Schnittkanten des Stichels sind. Figur 2 zeigt eine sich aus der Form des Stichels ergebende mögliche Grundform der Spitze einer Abtastnadel. Diese pyramidenförmige Spitze ergibt sich aus einer Verdoppelung, bzw. Symmetrierung des Schneidstichels nach Figur 1, womit sich eine rhombische Grundfläche 4 und gleichartige Seitenflächen 5 ergeben. Eine solche Spitzenform wäre jedoch an sich nicht brauchbar, weil einerseits die Abtastkanten nicht gerade sein dürfen, sondern leicht gewölbt sein sollen, um örtlich auf die Tonspuren an den Rillenwänden der Schallplatten aufzuliegen, und das freie Ende der Spitze muss auch abgerundet sein, da es nicht am Grund der Schallplattenrille aufliegen darf. Die unter Berücksichtigung dieser Bedingungen modifizierte Form der Spitze ist in Figur 3 dargestellt. Die Grundfläche 4' ist zwar immer noch im wesentlichen rhombisch, weist jedoch gekrümmte Seiten auf, und die Seitenflächen 5' sind nach aussen gewölbt, so dass sich gewölbte Kanten 6 und 7 ergeben. Das freie Ende der Spitze ist abgerundet.

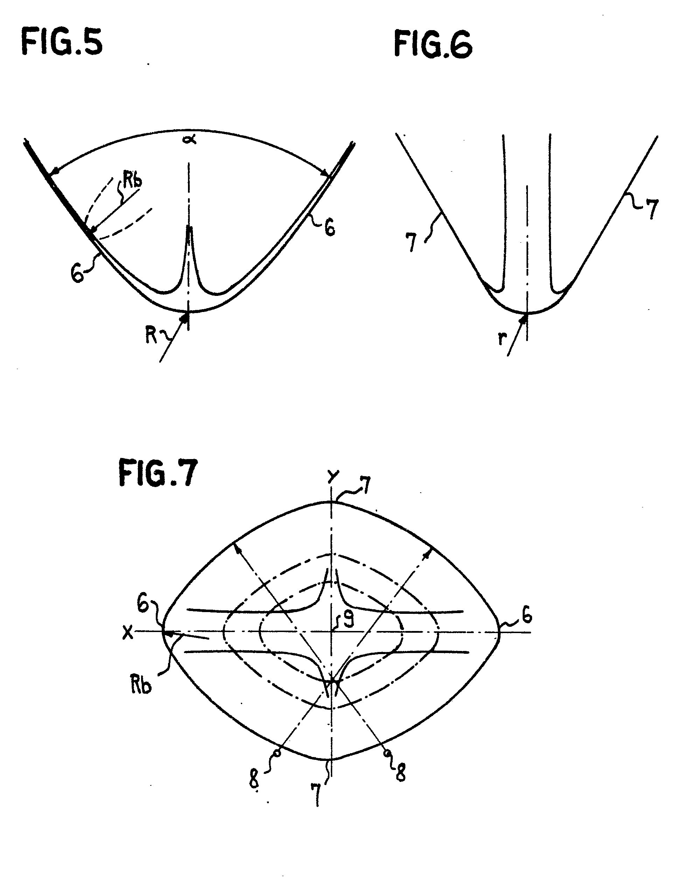

Figur 4 veranschaulicht einen leicht reproduzierbaren Herstellungsvorgang für die Spitze gemäss Figur 3. An einem Rohling, beispielsweise Diamantrohling, werden wir kegelförmige Flächen angeschliffen. Zu diesem Zwecke kann ein Schleifkopf mit kegelförmiger Innenfläche verwendet werden oder aber es kann beispielsweise eine ebene Schleifscheibe verwendet werden, gegen welche der Rohling zum Schleifen in geeigneter Winkelstellung angelegt und zur Erzeugung einer Kegelfläche gedreht wird. Wie insbesondere Figur 7 zeigt, sind die Achsen 8 der Kegelflächen gegenüber der Achse 9 der Spitze so versetzt, dass ihr Abstand von der mit y bezeichneten Achse kleiner ist als ihr Abstand von der mit x bezeichneten Achse. Daraus ergibt sich die rhombische Querschnittsform der Spitze, deren Querschnittsachse in x-Richtung grösser ist als die Querschnittsachse in y-Richtung. Damit ergeben sich auch schärfere Kanten 6 in der x-Richtung, die als Abtastkanten dienen. Wie Figur 5 zeigt, ist das freie Ende der Spitze gerundet, wobei der Rundungsradius R etwa 10 µm beträgt. Der Rundungsradius Rb der Abtastkanten 6 im Abtastbereiche beträgt ungefähr 5 µm bis höchstens 10 µm. Der Oeffnungswinkel $\alpha$ der Kegelflächen beträgt etwa 55°. Er kann aber auch allgemein zwischen 45° und 65° variieren. Der Rundungswinkel r am Uebergang zwischen den Kanten 7 beträgt rund 7 µm. Durch die optimale, der Form des Schneidstichels angenäherte Form der Abtastspitze, werden alle bisher erreichten Vorteile bei der Abtastung vereinigt, wie gute Abtastung bei starker Modulation und bei hohen Frequenzen sowie lange Lebensdauer der Abtastspitze und der Schallplatten. Die Form der Abtastspitze ist geometrisch genau definiert und somit unbegrenzt maschinell reproduzierbar. Bei der Herstellung ist die Form nicht von der Anisotropie des Werkstoffes abhängig, zum Beispiel von der kristallinen Struktur des Diamanten. Der menschliche subjektive Einfluss bei der Bearbeitung wird auf ein Minimum reduziert. All diese Faktoren ermöglichen eine genaue Fabrikation in grossen Serien mit allen Arten von Diamanten, nämlich orientierten, unorientierten, synthetischen Diamanten und Naturdiamanten sowie mit anderen harten Materialien, beispielsweise Saphir.

Bisher wurde angenommen, dass nur die Spitze der Abtastnadel aus einem harten Material, beispielsweise Diamant oder Saphir, geschliffen wird, und dass diese Spitze sodann auf einen Schaft aus Stahl, Titan oder dergleichen aufgesetzt wird. Die Form der Spitze kann jedoch auch am Ende eines mit ihr einteilig ausgeführten Schaftes aus dem gewünschten Material, wie Diamant oder Saphir, angeschliffen werden.

0020843

- 5 -

Patentansprüche:

1. Abtastnadel für Schallplatten, deren Spitze länglich-ovalen Querschnitt mit gerundeten Abtastkanten in den grösseren Querschnittsachsen aufweist, dadurch gekennzeichnet, dass die Spitze vier zentralsymmetrisch liegende Rotationsoberflächen aufweist, deren Achsen von der grösseren Querschnittsachse weiter entfernt sind als von der kleineren Querschnittsachse.

2. Nadel nach Anspruch 1, dadurch gekennzeichnet, dass die Rotationsoberflächen Kegelflächen sind.

3. Nadel nach Anspruch 1 oder 2, dadurch gekennzeichnet, dass der Oeffnungswinkel ($\propto$) der Kegelflächen zwischen 45° und 65°, vorzugsweise bei 55°, liegt.

4. Nadel nach einem der Ansprüche 1 - 3, dadurch gekennzeichnet, dass die Abtastkante im Auflagebereich einen Krümmungsradius von höchstens 10 µm aufweist.

0020843

5. Nadel nach einem der Ansprüche 1 - 4,
   dadurch gekennzeichnet,
   dass sich die grosse Querschnittsachse zur kleinen verhält wie mindestens annähernd 4:3.

6. Nadel nach einem der Ansprüche 1 - 5,
   dadurch gekennzeichnet,
   dass mindestens ihre Spitze aus künstlichem oder natürlichem Diamant besteht.

**FIG.1** **FIG.2** **FIG.3**

**FIG.4**

0020843

2/2

FIG.5

FIG.6

FIG.7

Europäisches
Patentamt

**EUROPÄISCHER RECHERCHENBERICHT**

0020843
Nummer der Anmeldung

EP 79 810 055.8

| Kategorie | Kennzeichnung des Dokuments mit Angabe, soweit erforderlich, der maßgeblichen Teile | betrifft Anspruch | KLASSIFIKATION DER ANMELDUNG (Int.Cl.3) |
|---|---|---|---|
| | Patents for inventions abridgments of specifications, group XXIII, Nr. 540001 bis 560000 1955, London Seiten 194 bis 195 & GB - A - 555 675 (VOIGHT) * Fig. 6 * | 1 | G 11 B 3/44 |
| | CH - A - 516 205 (BRUCE DIAMOND CORP.) * Patentanspruch; Spalte 4, Zeilen 14 bis 15; Spalte 5, Zeilen 15 bis 28; Fig. 4 und 5 * | 1,3, 6 | **RECHERCHIERTE SACHGEBIETE (Int. Cl.3)** |
| | US - A - 3 927 887 (MATSUSHITA) * Anspruch 3, Fig. 1 und 2 * | 1 | G 11 B 3/00 |
| | DE - B - 2 221 428 (BENZ) * Anspruch 1 * | 6 | |
| A | GB - A - 768 414 (INDUSTRIES MUSICALES) * Fig. 4 bis 6 * | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 22-02-1980 | LEITHÄUSER |